**Europäisches Patentamt**

**European Patent Office**

**Office européen des brevets**

(19)

(11) Veröffentlichungsnummer: **0 140 167**

**B1**

(12)

# EUROPÄISCHE PATENTSCHRIFT

(45) Veröffentlichungstag der Patentschrift:
**20.07.88**

(21) Anmeldenummer: **84111522.3**

(22) Anmeldetag: **27.09.84**

(51) Int. Cl.⁴: **A 61 C 3/00**

(54) **Zahnärztliches Werkzeug.**

(30) Priorität: 01.10.83 DE 3335797
21.10.83 DE 3338256
29.12.83 DE 3347428

(43) Veröffentlichungstag der Anmeldung:
**08.05.85 Patentblatt 85/19**

(45) Bekanntmachung des Hinweises auf die Patenterteilung:
**20.07.88 Patentblatt 88/29**

(84) Benannte Vertragsstaaten:
**AT BE CH FR GB IT LI NL SE**

(56) Entgegenhaltungen:
**DE-A-3 314 445**
**FR-A-540 530**
**FR-A-921 525**
**FR-A-1 485 752**
**US-A-3 894 339**
**US-A-4 389 192**

**Lexikon der Zahnmedezin S.204 (Hoffmann-Axthelm ,Quintessenz Verlag)**

**Die Akte enthält technische Angaben, die nach dem Eingang der Anmeldung eingereicht wurden und die nicht in dieser Patentschrift enthalten sind.**

(73) Patentinhaber: **Neumeyer, Stefan Dr., Leminger Strasse 10, D-8491 Eschlkam (DE)**

(72) Erfinder: **Neumeyer, Stefan Dr., Leminger Strasse 10, D-8491 Eschlkam (DE)**

(74) Vertreter: **Wasmeier, Alfons, Dipl.- Ing., Postfach 382 Greflingerstrasse 7, D-8400 Regensburg (DE)**

EP 0 140 167 B1

## Beschreibung

Die Erfindung bezieht sich auf ein Dentalwerkzeug, nämlich Finierer oder Schleif- und/oder Polierwerkzeug entsprechend dem Oberbegriff des Patentanspruches 1.

Derartige als Finierer ausgebildete Dentalwerkzeuge sind an sich in verschiedenen Ausführungen bzw. Formen bekannt und werden in der zahnärztlichen Praxis beispielsweise dazu verwendet, um nach dem groben Fertigstellen von Zahnfüllungen (Amalganfüllungen, Goldfüllungen oder Goldeinlagen, usw.) deren Flächen in einem materialabtragenden Arbeitsgang zu glätten bzw. nachzubearbeiten und/oder zur Schaffung eines gleichmäßigen Überganges zwischen Füllung und angrenzender Zahnfläche zu nivellieren (Finierung der Füllungsübergänge) und/oder entsprechend der natürlichen Formgebung eines Zahnes an der behandelten Stelle zu formen bzw. zu remodulieren (Finieren der Fissuren). Weiterhin werden Finierer u.a. auch dazu verwendet, überschüssiges Füllungsmaterial abzutragen. Finierer finden weiterhin bei der Herstellung von Kronen, bei der Rekonturierung allgemein sowie bei verschiedenen Einschleiftechniken Anwendung.

Speziell bekannt sind neben sogenannten "Rosenbohrern" mit einem den Arbeitsbereich dieses Finierers bildenden kugel- oder halbkugelförmigen Körper auch birnen-, walzen- und flammenförmige Finierer ("Lexikon der Zahnmedizin", Walter Hoffmann-Axthelm, Quintessenz Verlags-GmbH, 1983, Seite 204).

Den bisher auf dem Markt erhältlichen Finierern haftet vor allem der Nachteil an, daß in der Regel mehrere unterschiedlich geformte Finierer, die aufgrund ihrer Formgebung jeweils nur für einen bestimmten Arbeitsschritt im Rahmen einer Gesamtbehandlung oder -Nachbearbeitung geeignet sind, bis zum Abschluß dieser Behandlung oder Nachbearbeitung nacheinander eingesetzt werden müssen, was einen zeitraubenden Werkzeugwechsel am verwendeten zahnärztlichen Handstück (Winkelstückkopf) zur Folge hat. Mit allen bekannten Finierern und dabei speziell auch mit den vorgenannten bekannten Finierern ist es weiterhin nicht oder allenfalls nur sehr bedingt möglich, die natürliche Anatomie eines Zahnes im Bereich der Kaufläche durch Nachbearbeitung der dortigen Fläche einer Füllung wiederherzustellen, was schon wegen einer wirksamen Kariesprophylaxe heute in zunehmendem Maße gefordert wird. So ist beispielsweise der sogenannte "Rosenbohrer" ausschließlich zur Ausarbeitung der Fissuren in deren Bodenbereich einsetzbar, nicht jedoch zur Ausarbeitung der angrenzenden Höckerabhänge. Der bekannte birnenförmige Finierer bzw. der ebenfalls bekannte walzenförmige Finierer können im Bereich der Kaufläche eines Zahnes nur zu Erstellung von ebenen Flächen an den Höckerabhängen eingesetzt werden, wobei solche, mit diesen bekannten Finierern erhaltene ebene Flächen der natürlichen Anatomie eines Zahnes nicht entsprechen. Der flammenförmige Finierer ist ausschließlich für eine Bearbeitung im Zwischenzahnbereich geeignet und bestimmt.

Durch die Notwendigkeit, im Rahmen einer Gesamtbehandlung bzw. -Nachbearbeitung mehrere in ihrer Formgebung jeweils unterschiedliche und nur für einen bestimmten Arbeitsschritt geeignete Finierer einsetzen zu müssen, haftet den bekannten Finierern weiterhin auch der Nachteil an, daß mit diesen ein nahtloser Übergang zwischen solchen aneinander angrenzenden Flächen nicht erreichbar ist.

Auch als Schleif- und/oder Polierwerkzeuge ausgebildete Dentalwerkzeuge sind an sich in verschiedensten Ausführungen bekannt und werden in der zahnärztlichen Praxis für die verschiedensten Schleif- und Polierarbeiten in Zahnbereich verwendet. Diesen bisher auf dem Markt erhältlichen Schleif- und/oder Polierwerkzeugen haften die gleichen Nachteile an, wie sie voranstehend in bezug auf die bekannten Finierer genannt wurden.

Bekannt sind weiterhin Schleif- und Polierwerkzeuge (FR-A-921 525 und FR-A-540 530), die zwar einen rotationssymmetrischen, kegelartigen Körper aufweisen, deren Abmessungen aber um ein Vielfaches größer sind als die Abmessungen solcher Werkzeuge, die zur Bearbeitung von Zahnfüllungen geeignet sind. Diese bekannten Schleif- und Polierwerkzeuge sind somit ausschließlich für den zahntechnischen Bereich zum Bearbeiten von großflächigen Teilen von Zahnersatz (außerhalb der Zähne) bestimmt, nämlich zum Bearbeiten von Prothesenrändern usw. Selbst wenn diese bekannten Schleif- und Polierwerkzeuge unter Beibehaltung ihrer Formgebung in entsprechend kleinerer Form ausgebildet würden, würde dies nicht zu einem Dentalwerkzeug führen, mit welchem es möglich ist, die hinsichtlich ihrer Formenvielfalt sehr unterschiedlichen Flächen eines Zahnes zu bearbeiten, d.h. auch in einem solchen Fall wären im Rahmen einer Gesamtbehandlung bzw. -Nachbearbeitung weitere zusätzliche Dentalwerkzeuge erforderlich.

Der Erfindung liegt die Aufgabe zugrunde, ein Dentalwerkzeug, nämlich einen Finierer oder ein Schleif- und/oder Polierwerkzeug der gattungsgemäßen Art so auszubilden, daß es aufgrund seiner besonderen, neuartigen Formgebung für die unterschiedlichsten Arbeitsschritte geeignet und somit universell einsetzbar ist.

Zur Lösung dieser Aufgabe ist ein Dentalwerkzeug entsprechend dem kennzeichnenden Teil des Patentanspruches 1 ausgebildet.

Durch die die Erfindung auszeichnende besondere Ausbildung ist es erstmals gelungen, ein Dentalwerkzeug zu schaffen, welches für alle üblicherweise vorkommenden Arbeitsgänge bzw.

Arbeitsschritte verwendbar ist und mit welchem sich die durch die Formenvielfalt der natürlichen Anatomie eines Zahnes vorgegebenen sehr unterschiedlichen Flächen mit einem einzigen Werkzeug bearbeiten bzw. sich in ihrer natürlichen Formgebung wiederherstellen lassen, und zwar auch ohne einen zeitraubenden Werkzeugwechsel im Rahmen einer Gesamtbehandlung bzw. -Nachbearbeitung.

Weiterbildungen der Erfindung sind Gegenstand der Unteransprüche.

Die Erfindung wird nachfolgend anhand der Figuren an einem Ausführungsbeispiel näher erläutert. Es zeigen:

Fig. 1 einen Teilschnitt durch einen Zahn sowie durch eine Füllung, zusammen mit einer Ausführungsform des erfindungsgemäßen Dentalwerkzeugs in verschiedenen Arbeitsstellungen;

Fig. 2 ebenfalls einen Teilschnitt durch einen Zahn sowie durch eine Füllung, zusammen mit dem Dentalwerkzeug nach Fig. 1, jedoch bei einem von der Fig. 1 abweichenden Arbeitsgang;

Fig. 3 in Einzeldarstellung und in Seitenansicht das Dentalwerkzeug nach den Figuren 1 und 2.

In den Figuren sind 1 ein Zahn und 2 eine Zahnfüllung, beispielsweise eine Amalganfüllung, die mit Hilfe des Finierers bzw. Schleif- und/oder Polierwerkzeuges 3 jeweils abschließend behandelt bzw. nachbearbeitet wird. Der Finierer bzw. das Schleif- und/oder Polierwerkzeug 3 besteht aus einem positionssymmetrischen, kegelartigen Körper 4 mit abgerundeter Spitze S und mit einer senkrecht zur Symmetrieachse S des kegelartigen Körpers 4 verlaufenden und von der Spitze 5 entfernt liegenden Basis 6. An seiner Mantelfläche ist der kegelartige Körper 4 mit einer Vielzahl von Schneidkanten 7 versehen, die schräg zur Symmetrieachse S verlaufen.

Von der Basis 6 steht ein Schaft 8 weg, der einstückig mit dem kegelartigen Körper 4 beispielsweise aus Metall, vorzugsweise Hartmetall hergestellt ist und dessen Achse achsgleich mit der Symmetrieachse S liegt. Der Schaft 8 dient zum Anschluß des Finierers an ein zahnärztliches Handstück, und über diesen Schaft wird der Finierer 3 bei seiner Verwendung um die Achse S rotierend angetrieben

Wenn das Dentalwerkzeug ein Schleif- und/oder Polierwerkzeug ist, bildet der kegelartige Körper 4 auf seiner Mantelfläche eine Schleif- und/oder Polierfläche und ist dort beispielsweise mit Diamantsplittern besetzt oder mit einem Poliermaterial (Abrasionsmaterial) versehen. Der kegelartige Körper 4 kann dabei aus Metall oder einem geeigneten anderen Material, z. B. aus Kunststoff, gefertigt sein. Es ist auch möglich, den Körper 4 vollständig aus Poliermaterial bzw. polierend wirkendem Material herzustellen.

Bei der dargesellten Ausführungsform beträgt der Durchmesser des Finierers an der Basis 6 etwa 1,5 bis 1,7 Einheiten und der Abstand der Spitze 5 von der Basis 6 etwa 3,5 Einheiten, wobei eine Einheit beispielsweise etwa 1,0 mm ist.

Die Mantellinie 9 des kegelartigen Körpers ist über ihre gesamte Länge konvex gekrümmt, und zwar derart, daß sich der Durchmesser D in Abhängigkeit vom Abstand A, wie folgt, ändert:

| A | D |
|---|---|
| 0 Einheiten | 1,5 bis 1,7  Einheiten |
| 1 Einheit | 1,3 bis 1,45 Einheiten |
| 2 Einheiten | 1,0 bis 1,2  Einheiten |
| 3 Einheiten | 0,5 bis 0,7  Einheiten |

Eine spezielle und bevorzugte Ausführungsform des kegelartigen Körpers hat folgende Werte:

| A | D |
|---|---|
| 0 Einheiten | 1,6  Einheiten |
| 1 Einheit | 1,45 Einheiten |
| 2 Einheiten | 1,15 Einheiten |
| 3 Einheiten | 0,6  Einheiten |

wobei der Krümmungsradius an der Spitze 5 einen Werkt von 0,2 Einheiten hat.

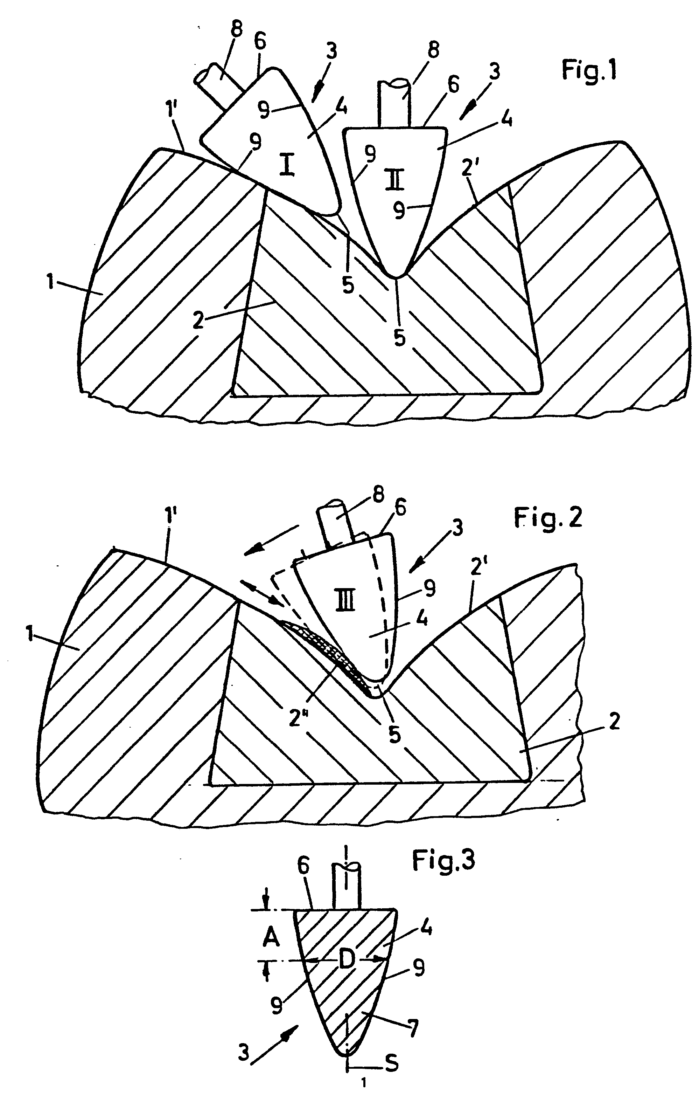

Wie die Figuren zeigen, können mit dem Finierer 3 bzw. mit dem Schleif- und/oder Polierwerkzeug 3 verschiedenste Arbeitsgänge bzw. Arbeitsschritte durchgeführt werden. In seiner in der Fig. 1 mit I gekennzeichneten Position dient der Finierer 3 zum Finieren bzw. Nivellieren der Füllung 2 im Bereich ihres Übergangs zum Zahn 1, um durch Abtragung überschüssigen Materials an der Fläche 2' der Füllung 2 einen möglichst gleichmäßigen Übergang zur Fläche 1' des Zahnes zu erreichen (Finieren der Füllungsübergänge). Dieses Finieren des Füllungsübergangs erfolgt durch ein Ansetzen des Finierers 3 an seiner Mantelfläche.

In der Position II dient der Finierer dazu, die Fläche 2' der Füllung im Bereich ihrer der natürlichen Formgebung des Zahnes 1 entsprechenden Vertiefung zu finieren bzw. zu glätten. Hierbei dient die Spitze 5 des Finierers 3 als Arbeitsfläche (Finieren der Fissuren).

Bei der Anwendung gemäß Fig. 2 bzw. gemäß der dortigen Position III des Finierers 3 soll mit Hilfe dieses Finierers überschüssiges Füllungsmaterial 2'' abgetragen werden, welches über das für die Fläche 2' gewünschte Niveau vorsteht. Unter Berücksichtigung der für die Fläche 2' angestrebten Formgebung kommt der Finierer 3 bei diesem Arbeitsgang zunächst hauptsächlich mit dem spitzennahen Bereich seiner Mantelfläche zur Anlage gegen das überschüssige Füllmaterial 2'', und später dann auch mit Umfangsbereichen, die von der Spitze 5 weiter entfernt liegen, wie dies mit der unterbrochenen Linie in der Fig. 2 angedeutet ist. Während der Bearbeitung wird der Finierer 3 bewegt bzw. geschwenkt, und zwar quer zur Symmetrieachse S sowie im wesentlichen senkrecht hierzu, wie dies durch die Pfeile in der Fig. 2 angedeutet ist.

Ein entsprechendes Schleif- oder Polierwerkzeug 3 dient zum Bearbeiten der Füllung 3 im Bereich ihres Überganges zum Zahn 1. Dies erfolgt durch ein Ansetzen des Schleif- oder Polierwerkzeuges 3 an seiner Mantelfläche, wobei die Spitze 5 des Schleif- oder Polierwerkzeuges 3 als Arbeitsfläche dient. Die Anwendung des Werkzeuges nach Fig. 2 bzw. nach deren Position III erfolgt wie vorstehend für den Finierer beschrieben.

**Patentansprüche**

1. Dentalwerkzeug, nämlich Finierer oder Schleif- und/oder Polierwerkzeug, bestehend aus einem rotationssymmetrischen, kegelartigen Körper (4), dessen Mantelfläche die Arbeitsfläche des Werkzeuges bildet, wobei der Finierer mit einer Vielzahl von Schneidkanten an der Mantelfläche dieses Körpers (4) versehen ist und wobei die Mantelfläche des Schleif- und/oder Polierwerkzeuges als Schleif- oder Polierfläche ausgebildet ist, sowie aus einem von der Basis (6) dieses Körpers (4) ausgehenden Schaft (8), dessen Achse achsgleich mit der Symmetrieachse des kegelartigen Körpers (4) liegt, wobei der kegelartige Körper (4) an seiner Spitze (5) abgerundet ist und die Mantelfläche des kegelartigen Körpers (4) in Richtung Basis-Spitze (Mantellinie) entlang der gesamten Mantellinie konvex gekrümmt ist, <u>dadurch gekennzeichnet</u>, daß der Krümmungsradius an der Spitze des kegelartigen Körpers (4) 0,2 mm beträgt, daß der kegelartige Körper (4) an seiner Basis (6) einen Durchmesser von etwa 1,5 - 1,7 mm aufweist, daß der Abstand zwischen der Spitze (5) und der Basis (6) etwa 3,5 mm beträgt, und daß sich der Durchmesser (D) des kegelartigen Körpers (4) in Abhängigkeit vom Abstand (A) von der Basis (6), wie folgt, ändert:

Abstand (A) Durchmesser (D)

| | |
|---|---|
| 1 mm | 1,3 bis 1,45 mm |
| 2 mm | 1,0 bis 1,2 mm |
| 3 mm | 0,5 bis 0,7 mm. |

2. Dentalwerkzeug nach Anspruch 1, dadurch gekennzeichnet, daß der kegelartige Körper (4) an seiner Basis (6) einen Durchmesser von 1,6 mm aufweist, und daß sich der Durchmesser (D) des kegelartigen Körpers (4) in Abhängigkeit vom Abstand (A) von der Basis (6), wie folgt, ändert:

Abstand (A) Durchmesser (D)

| | |
|---|---|
| 1 mm | 1,45 mm |
| 2 mm | 1,15 mm |
| 3 mm | 0,6 mm. |

3. Dentalwerkzeug nach Anspruch 1 oder 2, dadurch gekennzeichnet, daß die Schneidkanten (10) schräg zur Achse (S) des Schaftes (8) verlaufen

4. Dentalwerkzeug nach einem der Ansprüche 1 - 3, dadurch gekennzeichnet, daß bei Ausbildung des Werkzeuges als Schleif- und/oder Polierwerkzeug die Mantelfläche (7) des kegelartigen Körpers (4) mit Diamantsplittern oder mit einem Abrasionsbelag versehen ist.

5. Dentalwerkzeug nach Anspruch 4, dadurch gekennzeichnet, daß der kegelartige Körper (4) aus Kunststoff oder Metall besteht.

**Claims**

1. Dental tool, namely finisher or grinding and/or polishing tool, consisting of a rotationally symmetrical, conelike body (4), the generated surface of which forms the working surface of the tool, the finisher being provided with a plurality of cutting edges on the generated surface of this body (4) and the generated surface of the grinding and/or polishing tool being designed as grinding or polishing surface, as well as of a shank (8) which leaves from the base (6) of this body (4) and the axis of which is uniaxial with the axis of symmetry of the conelike body (4), the conelike body (4) being rounded off at its tip (5) and the generated surface of the cone like body (4) being convexly curved in the direction "base-tip" (generating line) along the entire generating line, characterized in that the radius of curvature at the tip of the conelike body (4) is 0.2 mm, in that the conelike body (4) has at its base (6) a diameter of approximately 1.5 - 1.7 mm, in that the distance between the tip (5) and the base (6) is approximately 3.5 mm, and in that the diameter (D) of the conelike body (4) changes as a function of the distance (A) from the base (6):

Distance (A) Diameter (D)

| | |
|---|---|
| 1 mm | 1.3 to 1.45 mm |
| 2 mm | 1.0 to 1.2 mm |
| 3 mm | 0.5 to 0.7 mm. |

2. Dental tool according to claim 1, characterized in that the conelike body (4) has at its base (6) a diameter of 1.6 mm, and in that the diameter (D) of the conelike body (4) changes as a function of the distance (A) from the base (6):

Distance (A) Diameter (D)

| | |
|---|---|
| 1 mm | 1.45 mm |
| 2 mm | 1.15 mm |
| 3 mm | 0.6 mm |

3. Dental tool according to claim 1 or 2, characterized in that the cutting edges (10) run obliquely to the axis (5) of the shank (8).

4. Dental tool according to one of claims 1 - 3, characterized in that, when the tool is designed as a grinding and/or polishing tool, the generated surface (7) of the cone like body (4) is provided with diamond splinters or with an abrasion coating.

5. Dental tool according to claim 4, characterized in that the conelike body (4) consists of plastic or metal.

**Revendications**

1. Outil dentaire, plus précisément finisseur ou outil à rectifier et/ou polir, constitué d'un corps conoïde de révolution (4) dont la surface latérale forme la surface active de l'outil, le finisseur étant pourvu d'un grand nombre d'arêtes coupantes sur la surface latérale du corps (4) et la surface latérale de l'outil à rectifier et/ou polir formant surface rectifieuse ou polisseuse, et d'une queue (8) qui part de la base (6) du corps (4) et dont l'axe coïncide avec l'axe de symétrie du corps conoïde (4) le corps conoïde (4) étant arrondi à son sommet (5) et la surface latérale du corps conoïde (4) étant courbée de manière convexe dans la direction base-sommet (génératrice) le long de toute la génératrice, caractérisé en ce que le rayon de courbure au sommet du corps conoïde (4) est de 0,2 mm, en ce que le corps conode (4) présente à sa base (6) un diamètre d'environ 1,5 à 1,7 mm, en ce que la distance entre le sommet (5) et la base (6) est d'environ 3,5 mm et en ce que le diamètre (D) du corps conoïde (4) varie en fonction de la distance (A) de la base (6) de la manière suivante:

Distance (A) Diamètre (D)

| 1 mm | 1,3 à 1,45 mm |
|------|---------------|
| 2 mm | 1,0 à 1,2 mm |
| 3 mm | 0,5 à 0,7 mm |

2. Outil dentaire suivant la revendication 1, caractérisé en ce que le corps conoïde (4) présente à sa base (6) un diamètre de 1,6 mm et en ce que le diamètre (D) du corps conoïde (4) varie en fonction de la distance (A) de la base (6) de la manière suivante;

Distance (A) Diamètre (D)

| 1 mm | 1,45 mm |
|------|---------|
| 2 mm | 1,15 mm |
| 3 mm | 0,6 mm |

3. Outil dentaire selon l'une des revendications 1 et 2, caractérisé en ce que les arêtes coupantes (7) sont inclinées sur l'axe (5) de la queue (8).

4. Outil dentaire selon l'une des revendications 1 à 3, caractérisé en ce que lorsqu'il s'agit d'un outil à rectifier et/ou polir, la surface latérale du corps conoïde (4) est pourvue de paillettes de diamant ou d'une garniture abrasive.

5. Outil dentaire selon la revendication 4, caractérisé en ce que le corps conoïde (4) est en matière plastique ou en métal.

Fig.1

Fig.2

Fig.3